# EUROPEAN PATENT APPLICATION

(11) **EP 4 167 196 A1**
(43) Date of publication of application: **19.04.2023**
(21) Application number: 21202834.4
(22) Date of filing: 15.10.2021
(51) Int. Cl.: G06V 20/20, G06V 10/764, G06V 10/62, A61F 9/08

(54) **METHOD FOR NOTIFYING A BLIND OR VISUALLY IMPAIRED USER OF THE PRESENCE OF OBJECT AND/OR OBSTACLE**

(71) Applicant: Fusion Lab Technologies SARL, 1315 La Sarraz (CH)
(72) Inventor: FABIEN, Mael, 1315 La Sarraz (CH); VOLLMER, Bruno, 1315 La Sarraz (CH); BRAUN, Rudolf, 1315 La Sarraz (CH)
(74) Representative: KATZAROV S.A.

(57) **Abstract**

The present relates to method for notifying a blind or visually impaired user (U) placed in an environment of the presence of objects in said environment, the method comprises:
i) acquiring data of the environment surrounding the user by using at least one sensor, said data comprising at least images;
ii) processing the acquired data by applying a trained object detector model to identify said objects present in said environment;
iii) tracking the displacement of the detected objects to attribute a score to each detected object depending on at least one predetermined tracking criteria;
iv) selecting the objects whose score is above a predetermined threshold;
v) generating adaptative object feedback that is transmitted to the user (U) for each selected object, said adaptative object feedback comprising features that are adjusted depending on the score of each selected object to notify said user (U) about the presence of the objects in said environment.

## Description

### Technical Field

The present invention relates to a computer-implemented method for notifying a blind or visually impaired user placed in an environment of the presence of objects and/or obstacles in said environment.

The invention further relates to a method for guiding a blind or visually impaired user in an environment.

The invention also relates to a system for notifying a blind or visually impaired user placed in an environment of the presence of objects in said environment

### Background of the art

About 40 million people in the world are legally blind and this number is even greater by taking into account people that are not fully blind but visually impaired. The Blind or visually impaired person must understand the nearby environment to ensure safe daily navigation.

A blind or visually impaired person generally relies on canes to guide through the nearby environment for their everyday life displacements such as, when walking down a street or hallway, or when navigating a room or store. A conventional mobility cane, however, only provides a very limited amount of information about a person's surrounding environment, usually limited to the objects that may be physically touched by the cane. In other words, white canes are used to avoid near obstacles but cannot be used for objects out of reach of the cane.

Conventional canes, i.e. white canes, have been improved to provide information about potential obstacles in the nearby environment that are placed beyond the reach of the conventional cane. For example, one could mention acoustic canes that send out audio signals that reflect or echo from objects within the user's surrounding environment in a process named echolocation that is closely related to the Doppler effect-based radar used by submarine to locate the nearby enemy submarine. Alternatively, electronic white canes have also been developed to generate a vibration and warn the user.

More recently, the document US2019070064 described a device named as vision assistance device VAD comprising a camera to scan the environment to detect and identify landmarks such as signs, navigational cues, exit signs, bathroom signs, crosswalk signs or other signs commonly used to navigate an environment. The point of the VAD is to assist a blind person to detect, identify, and/or move towards a landmark. The device is further equipped with an electrostimulation module to provide haptic feedback to the user by electrotactile stimulation of the tongue depending on the detected landmark. First, the camera of the VAD receives image information from image data captured by the camera (or, from image data stored on a remote platform) and the image data is compared/checked against data stored in a remotely connected database. Then a determination is made as to whether there is a match between the input image data and the image pattern stored in the database. The point of this step is to detect the presence of a sign such as a crosswalk sign in the captured image. If the determination is no, no detection information is returned to the VAD. If the determination is yes, detection information is returned to the VAD to provide an electrotactile simulation matching the detected information. Therefore, the VAD detection capabilities depend on the database and in particular on the accuracy and relevancy of the information stored on the database. Haptic feedback is very limited and not user-friendly. Furthermore, this solution does not spot obstacles and does not do navigation.

The document US20150198454 discloses a wearable neck device for providing environmental awareness. The neck device must include a camera to detect image data corresponding to a surrounding environment of the wearable neck device and an inertial measurement unit (IMU) sensor to detect inertial measurement data corresponding to a positioning, velocity, or acceleration of the wearable neck device. The neck device must also contain a global positioning system (GPS) unit coupled to the wearable neck device and adapted to detect location data corresponding to a location of the wearable neck device. The wearable neck device further includes a processor connected to the IMU, the GPS unit, and the camera. The processor is adapted to recognize an object in the surrounding environment by analyzing the image data based on the stored object data and the inertial measurement data or the location data. In other words, the neck device always requires a location sensor to locate and identify an object in the environment of the user. However, the solution of document US20150198454 is limited to the creation of navigation path and does not include a description of the environment.

Therefore, when it comes to assisting blind or visually impaired persons during a displacement in an environment, the existing devices present multiple drawbacks and do not provide satisfying solutions. There is a need to provide a solution to facilitate the displacement of blind or visually impaired persons in an environment (for example a new environment) to overcome the issues and limitations of the existing approaches. In particular, there is a need to improve the feedback and the completeness that is given to the user.

### Summary of the invention

The above problems are solved or at least minimized by the present invention.

In a first aspect, the invention relates to a computer-implemented method for notifying a blind or visually impaired user placed in an environment of the presence of objects in said environment, the method comprises:
- detecting said objects in the environment by using at least one sensor configured for analysing the environment surrounding the user;
- generating and transmitting feedback to the user to notify said user of the presence of said detected objects in the environment,
   the method being characterized in that the detection of the objects comprises
- acquiring data of the environment surrounding the user by using at least one sensor, said data comprising at least images;
- processing the acquired data by applying a trained object detector model to identify said objects present in said environment;
- tracking the displacement of the detected objects to attribute a score to each detected object depending on at least one predetermined tracking criteria;
- selecting the objects whose score is above a predetermined threshold;
   and in that the generation and transmission of feedback comprises
- generating adaptative object feedback that is transmitted to the user for each selected object, said adaptative object feedback comprising features that are adjusted depending on the score of each selected object to notify said user about the presence of the objects in said environment.

In a second aspect, the invention relates to a method for guiding a blind or visually impaired user in an environment, the method comprising:
a) detecting the objects and/or the obstacles present in said environment by applying a method according to the present invention;
b) dynamically computing a path from a starting position to an end position through the environment to avoid the selected objects and/or the selected obstacles;
c) preferably integrating said path into a computer device's navigation system to guide the user on said path, for instance a smartphone.

In a third aspect, the invention relates to a system for notifying a blind or visually impaired user placed in an environment of the presence of objects in said environment, the system comprises:
- a data acquisition module to acquire data of the environment surrounding the user, said data acquisition module comprising at least a camera to acquire images;
- a computation module for processing the acquired data by applying a trained object detector model to identify the objects present in said environment, and for tracking the displacement of the detected objects to attribute a score to each detected object depending on at least one predetermined tracking criteria, and for selecting the objects whose score is above a predetermined threshold;
- a feedback module configured for generating an adaptative object feedback that is transmitted to the user for each selected object, said adaptative object feedback comprising features that are adjusted by the feedback module depending on the score of each selected object to notify said user about the presence of the objects in said environment.

### Description of the invention

The invention concerns a computer-implemented method for notifying a blind or visually impaired user placed in an environment of the presence of objects in said environment, the method comprises:
- detecting said objects in the environment by using at least one sensor configured for analysing the environment surrounding the user;
- generating and transmitting feedback to the user to notify said user of the presence of said detected objects in the environment,
   the method being characterized in that the detection of the objects comprises
- acquiring data of the environment surrounding the user by using at least one sensor, said data comprising at least images;
- processing the acquired data by applying a trained object detector model to identify said objects present in said environment;
- tracking the displacement of the detected objects to attribute a score to each detected object depending on at least one predetermined tracking criteria;
- selecting the objects whose score is above a predetermined threshold;
   and in that the generation and transmission of feedback comprises
- generating adaptative object feedback that is transmitted to the user for each selected object, said adaptative object feedback comprising features that are adjusted depending on the score of each selected object to notify said user about the presence of the objects in said environment.

The overall goal of the present invention is to allow a user to determine the state of the surrounding environment and receiving descriptive navigational information through different types of feedback, including for instance sounds, vibrations, and speech. To that end, the present invention aims at creating a real-time map of the surrounding environment of the user by performing analytics and provides various types of feedback to the user depending on obstacles and/or objects detected, and GPS navigation.

The generated feedback comprises features that can be adjusted to provide complete information to the user about the object (or obstacle). In other words, for instance the user is capable of evaluating the dangerousness of the object or the type of object (or obstacle) solely based on the generated feedback. The feedback is adjusted to provide the user with information related to the object (or obstacle).

The user is a blind or visually impaired person (i.e. not a legally blind person) placed in an environment, for instance in an external environment such as in the street, or inside a building such as in a store or in a museum. The user is either in motion or motionless, or the user is alternatively in motion and motionless.

The present invention aims at detecting objects (NB: obstacles can also be detected in an aspect of the invention, see below). Objects are items or articles that can be detected by the trained object detector. An object can be any type of item or article, in motion or motionless, that can be identified by the trained object detector. For instance, objects can be a bench, a traffic sign, a person, a car etc...

In a first step, a sensor, for instance a camera or multiple cameras, is used to acquire data of the environment surrounding the user, the data comprising at least images.

The data and notably the images are subsequently processed by applying a trained object detector model to process the acquired data. The trained detector model is for instance chosen among convolutional neural network architectures (CNN) or vision transformers. For example : YOLO, Mobile-Nets, DETR (detection transformer), fast R-CNN, Mask R-CNN, Soft teacher.

Preferably, the trained object model detector that can be used in the present invention comprises at least the following main features or functionalities:
- at least about 200'000 training images of various classes to facilitate the identification of different objects;
- A deep neural network architecture based on CNN or vision transformers;
- Running on a tensor processing unit (TPU);
- the mains features of YOLO, for instance at least a fast inference time of less than 80 milliseconds.

Using a trained object detector is advantageous compared to existing object detectors that require a connection to an object database since it allows to detect more (in particular generic) objects and not have to rely on matching objects of a database or on matching landmarks.

Upon detection, the detected objects are tracked to attribute a score to each detected object depending on at least one predetermined tracking criteria. For instance, one of the predetermined tracking criteria is the trajectory of the detected object to select objects whose trajectories are directed toward the user. The overall goal of the tracking step is to predict the positions of the objects. For instance, based on the tracked position (initial position) the tracking process comprises a repetition of linear interpolation of the next positions of the object in a determined time, preferably the position of the object in a few seconds, the computed linear interpolated positions being used to create a predicted trajectory for a detected object. Alternatively, the tracking process comprises the use of Kalman filters, or deep learning architectures based on LSTM (long short-term memory)

In a preferred embodiment, the predetermined tracking criteria is chosen from the list comprising the distance between the user and the selected object, the trajectory of the selected object, the speed of the selected object, the dangerousness of the selected object, stationarity of the object (i.e. whether the object is static (e.g. bench) or in movement), surroundings of the objects, or a combination of these criteria. A score is attributed to the detected object based on one of multiple predetermined tracking criteria, preferably based on the trajectory, preferably mostly based on the trajectory.

Then, advantageously the present invention further comprises a selection step to prioritize the detected objects. The selection step acts as a filter (i.e. filtering step for instance carried out by a filtering module) to select or discard some of the detected objects. The point is to determine the detected objects for which feedback will be given to the user. In other words, the selection step permits selecting the most relevant detected object and discarding irrelevant detected object. It allows to limit feedback that are given to the user to facilitate the feedback's understanding. This also allows simulating a sighted person's understanding of an environment or a scene.

The selection step is based on a threshold to select objects whose score is above a predetermined threshold. For instance, the score is set between 0 (zero) and 1 (one), and any object reaching a score above 0.5 will be notified to the user.

The present invention further comprises the generation of adaptative object feedback that is transmitted to the user for each selected object. Feedback is adaptative feedback since it comprises features that can be adjusted depending on the score of each selected object to notify said user about the presence of the objects in said environment. For instance, for haptic feedback the features that can be adjusted are chosen among frequencies of the vibration, intensity of the vibration, duration of each vibration, direction of the vibration, start and end of the vibration, balanced vibration between a first direction and second direction.

Advantageously, the present invention allows to improve feedback given to the user by combining the following features :
- Firstly, the detection of the objects is improved by using a trained object detector;
- Secondly by predicting the trajectories of the detected object;
- Thirdly by prioritizing the detected object(or obstacle) to select only the most relevant one (based on a score) and discard the irrelevant/less relevant ones to limit the number feedback given to the user to the most important ones;
- Fourthly by creating adaptative feedback to the user so that the user to provide more than just an individual sound or vibration to the user, so that the user can evaluate the dangerousness of the object (or obstacle) based on feedback (distance, speed, type of object etc..)

Preferably the images are acquired by using at least a camera with a predetermined field of view, said predetermined field of view is defined by at least about 160° vertical and at least about 80° horizontal, preferably at least about 170° vertical and at least about 90° horizontal, preferably said camera can be flipped (e.g. 170*90 or 90*170). This allows the identification of objects coming on the side (cars for instance) or at the head level (traffic signs for instance). Preferably, images comprise depth images, grayscale or and colour images.

Preferably the predetermined field of view is defined to detect the floor on which the user is placed. This allows to take into account the floor and to prevent the detection of the floor as an object or an obstacle. It also permits to detect objects lying on the floor and to detect obstacles or objects on the floor, such as holes or steps. This permits improving the obstacle detection and increase the distance of obstacle detection.

In a preferred embodiment, the present invention is also configured for detecting obstacles. In the present invention, obstacles are defined as objects comprised in a determined safety field around the user. In other words, the obstacles are closer to the user than the objects and therefore represent a high risk to hit said user. An obstacle can be "any" element that is close to the user, it does not have to be a detected object. For instance, the safety field is centered around the user. Preferably the safety field is comprised between about 15 cm and 4 meters around the user, preferably centered around the user.

In a preferred embodiment, the distance threshold can be dynamic, i.e. adapted to the situation. If it is crowded around the user, the threshold will be low. Else, it will increase automatically.

In a preferred embodiment, the method further comprises the detection of obstacles in the environment, the obstacle's detection comprising:
- ii') processing the acquired data by applying an obstacle detection tool to detect the obstacles present in said environment;
- iii') determining a safety field around said user based on a distance threshold;
- iv') filtering the detected obstacles to select obstacles that are within said safety field;
- v') generating an adaptative obstacle feedback that is transmitted to the user for each selected obstacle, said adaptative obstacle feedback comprising features that are adjusted depending on each selected obstacle to notify said user about the presence of the obstacles within the safety field;

The detected obstacles are filtered to limit the feedback generated and transmitted to the user to the most relevant obstacle. It avoids information overload.

In a preferred embodiment, the obstacle detection and the object detection are carried out in parallel. This allows an overall improvement of the information about the surrounding environment provided to the user. It allows the notification to be faster and more efficient since the obstacle detection is in real-time and not waiting for or depending on the object detection process.

In a preferred embodiment, the method further comprises
- dynamically detecting obstacles by repeating steps i) and ii') to v') at about five times per second, preferably at least eight times per second, more preferably at least about ten times per second, for instance at least about fifteen times per second;
This allows to update on a regular basis information regarding potential obstacles in the environment surrounding the user, in other words a real-time guidance.

In a preferred embodiment, the method further comprises
- dynamically detecting objects by repeating steps i) to v) at about two times per second, preferably at least three times per second, more preferably at least about four times per second, for instance at least about five times per second
This allows to update on a regular basis information regarding potential objects in the environment surrounding the user. It also allows an improved object tracking.

Preferably, adaptative obstacle feedback is based on a score attributed to each selected obstacle, the features of adaptative obstacle feedback being adjusted depending on said score, said score being based on at least one parameter chosen among the distance between the user and the selected obstacle, the trajectory of the selected obstacle, the speed of the selected obstacle, the dangerousness of the selected obstacle. This allows the user to react quickly to more important or relevant objects/obstacles. It also increases safety.

Preferably adaptative object feedback is based on a score attributed to each selected object, the features of adaptative object feedback being adjusted depending on said score, said score being based on at least one parameter chosen among the distance between the user and the selected object, the trajectory of the selected object, the speed of the selected object, the dangerousness of the selected object. This allows the user to react quickly to more important or relevant objects/obstacles. It increases safety.

In a preferred embodiment, object and/or obstacle feedback comprises haptic feedback and/or audible feedback, preferably said haptic feedback comprising vibration of a vibrating unit, preferably said audible feedback comprising sound, spatial sounds, speech. Preferably, object and/or obstacle feedback comprises haptic feedback and audible feedback, since these feedbacks are complementary, sounds are faster to process than speech to locate the position of an element in space for the user.

Preferably the features of haptic feedback that are adjustable are chosen among frequencies of the vibration, intensity of the vibration, duration of each vibration, direction of the vibration, start and end of the vibration, balanced vibration between a first direction and second direction.

Overall, playing on the features of feedback allows a fine-grain understanding of the object/obstacle characteristics, for instance the position the speed, the type, the size, the angle, the distance etc...

Preferably the features of audible feedback that are adjustable comprise the frequency of the sound waves, intensity of the sound wave, the duration of the sound waves, direction of the sound, type of sound for instance spoken sounds or short audio cues.

Preferably the audible feedback comprises a library of spatial sounds, said library comprising a plurality of spatial sound families, each family corresponding to group of objects or a group of obstacles, all the spatial sounds of a family sharing a core feature. This allows shortening the learning process. This is also pleasant to listen to by the user.

Preferably, sounds can be configured to be only one sound (generic) to warn the user about the element's position or different sounds (that can be personalized by the user) for the different objects.

Preferably the data acquired by said at least one sensor comprises images for instance two dimensions and/or three dimensions images, sounds, temperature of an area in the environment, temperature of the user for instance the user's face, preregistered map or GPS coordinates. It provides additional guidance or instructions to the user.

The invention also relates to a method for guiding a blind or visually impaired user in an environment, the method comprising:
a) detecting the objects and/or the obstacles present in said environment by applying a method according to the present invention;
b) dynamically computing a path from a starting position an end position through the environment to avoid the selected objects and/or the selected obstacles;
c) preferably integrating said path into a computer device's navigation system to guide the user on said path, for instance a smartphone.

The invention also relates to a computer device comprising means for carrying out the method of the present invention.

The computer device being for instance chosen among a personal computer. For instance, the computer device is an embedded device equipped with electronic components such as CPU, TPU, Ram, SSD, mother board etc...

The particular advantages of the computer device are similar to the ones of the method according to the invention and will thus not be repeated here.

The invention further relates to a computer program comprising instructions which, when the program is executed by a computer, causes a computer to carry out the method of the present invention.

The particular advantages of the computer program are similar to the ones of the method according to the invention and will thus not be repeated here.

The invention also relates to a system for notifying a blind or visually impaired user placed in an environment of the presence of objects in said environment, the system comprises:
- a data acquisition module to acquire data of the environment surrounding the user, said data acquisition module comprising at least a camera to acquire images;
- a computation module for processing the acquired data by applying a trained object detector model to identify the objects present in said environment,
   and for tracking the displacement of the detected objects to attribute a score to each detected object depending on at least one predetermined tracking criteria,
   and for selecting the objects whose score is above a predetermined threshold;
- a feedback module configured for generating adaptative object feedback that is transmitted to the user for each selected object, said adaptative object feedback comprising features that are adjusted by the feedback module depending on the score of each selected object to notify said user about the presence of the objects in said environment.

The particular advantages of the system are similar to the ones of the method according to the invention and will thus not be repeated here.

In a preferred embodiment, the computation module comprises a processor configured for executing the trained object detector model so that the detection of the objects is performed locally in the computation module of the system, for instance a tensor processing unit (TPU for instance). It provides energy efficiency and fast inference on edge devices.

In a preferred embodiment, the system is further configured to detect the presence of obstacles in said environment, and wherein
the computational module is further configured
for processing the acquired data by applying an obstacle detection tool to detect the obstacles present in said environment;
and for determining a safety field around said user;
and for filtering the detected obstacles to select obstacles that are within said safety field;
the feedback module is further configured for generating an adaptative obstacle feedback that is transmitted to the user for each selected obstacle, said adaptative obstacle feedback comprising features that are adjusted depending on each selected obstacle to notify said user about the presence of the obstacles within the safety field;

In a preferred embodiment, the images are acquired by using at least a camera with a predetermined field of view, said predetermined field of view is defined by at least about 120° vertical and at least about 60° horizontal, preferably at least about 160° vertical and at least about 80° horizontal, for instance between about 170° vertical and about 90°horizontal, preferably said camera can be flipped (e.g. 170*90 or 90*170). This allows the identification of objects coming on the side (cars for instance) or at the head level (traffic signs for instance). Preferably, images comprise depth images and grayscale or colour images.

In a preferred embodiment, the images are acquired by using several cameras, for instance between two and five cameras, preferably three cameras. Advantageously, each camera can capture a part of the environment.

Preferably the predetermined field of view is defined to detect the floor on which the user is placed.

Preferably the data acquisition module comprises sensors chosen among thermal camera, lidars sensors, depth cameras, infrared sensors, ultrasound sensors, RGB cameras grayscale cameras.

Preferably the feedback module comprises at least one vibration unit for instance a motor or a haptic actuator, or earphones, bone conduction headphones or speakers for transmitting audible feedback.

Preferably the audible feedback can be provided by hearing aids. It allows to cover for the cases where the users have both visual and hearing impairment.

Preferably the system is configured for being worn as a belt or as a chest mount system, or on the straps of a bag, of a backpack, or sling bags, or bandoliers, or as a necklace.

The particular advantages of the system are similar to the ones of the method according to the invention and will thus not be repeated here.

As used herein, the word "means" (singular or plural) preceded or followed by a function can be replaced by the word "unit" or " module". For instance "computation means" can be replaced by "computation unit" or "computation module".

The embodiments describe for the computer-implemented method also apply to the computer program and to the system according to the present invention mutatis mutandis.

### Brief description of the drawings

Further particular advantages and features of the invention will become more apparent from the following non-limitative description of at least one embodiment of the invention which will refer to the accompanying figures (tables and plots), wherein
- Figures 1 and 2 represent a system according to a first embodiment of the present invention
- Figure 3 is an exploded view of the main casing of the system 1 represented in figures 1 and 2;
- Figure 4 is a scheme illustrating the main steps of the methods according to the present invention;
- Figures 5, 6 and 7 are examples representing obstacles and/or objects detection and notification;

### Detailed description of the invention

The present detailed description is intended to illustrate the invention in a non-limitative manner since any feature of an embodiment may be combined with any other feature of a different embodiment in an advantageous manner.

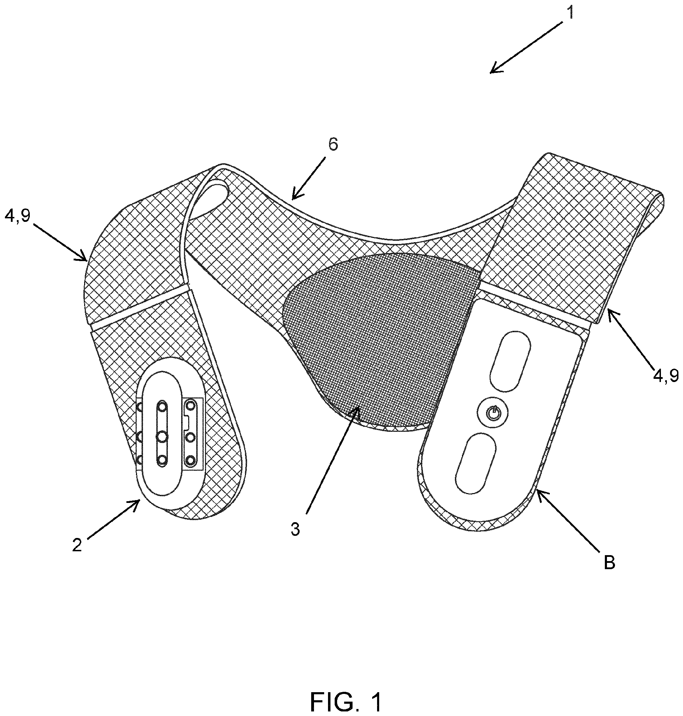

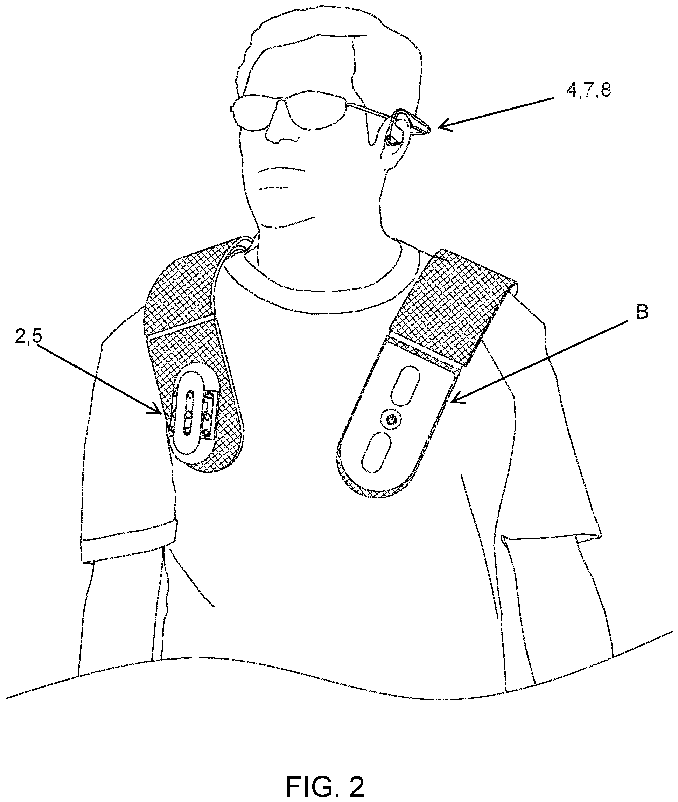

An example of a system 1 in a first embodiment according to the present invention is represented in figures 1 and 2. The invention is not limited to the embodiment represented in figures 1 and 2.

The system 1 represented in figures 1 and 2 comprises a data acquisition module 2, a computation module 3 and a feedback module 4. Figure 1 further represents a batterie module to supply energy to the system 1. In the present embodiment, the adaptative feedback is generated via sounds, that are sent from the computation module 3 to the headphones 8 (as feedback module 4) over Bluetooth connection.

In the present embodiment, the data acquisition module 2 (and optionally the computation module 3) is embedded in a main casing 5. The main casing 5 is attached to a belt or harness 6 configured for being worn by the user either as a belt (not shown) or as a chest mount or harness by putting it around the shoulder as shown in figure 2. For instance, the main casing 5 is reversible attached to the harness 6 by magnetic hold.

The feedback module 4 comprises an audio unit 7, for instance headphones 8 to provide the user with audible feedback.

Optionally, the feedback module 4 can further comprises a haptic feedback unit 9 to provide the user with haptic feedback. for instance, the haptic feedback unit comprises haptic actuators (i.e. buzzers) hidden in the strap of the harness 6 that vibrate upon actuation, for instance on the left and on the right.

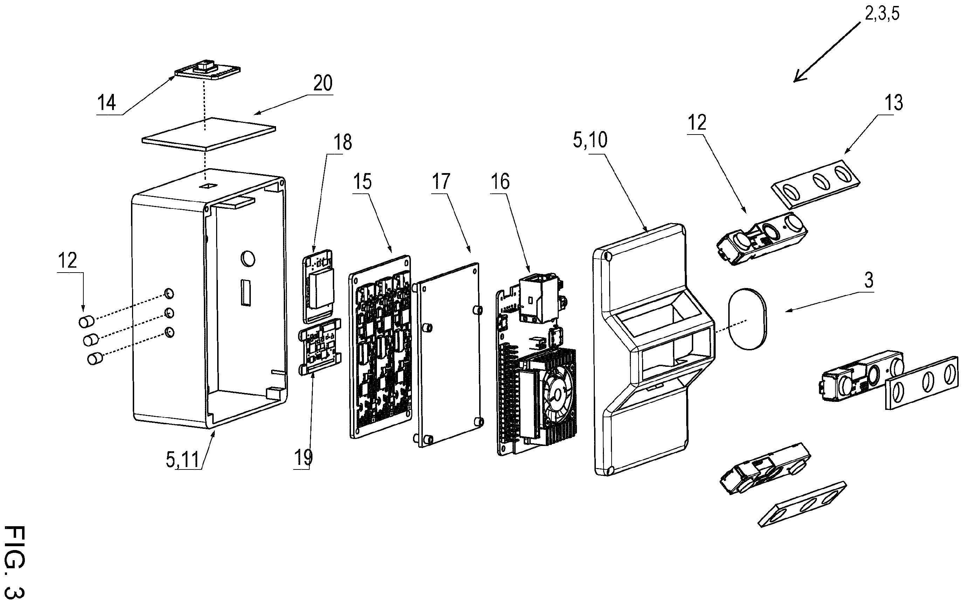

Figure 3 is an exploded view of the main casing 5 of the system 1 represented in figure 1. The main casing 5 comprises a front casing 10 nested in a back casing 11 to receive the various component of the data acquisition module 2 in the main casing 5.

The data acquisition module 2 comprises three depth cameras 12 embedded in the front casing 10, each being protected by a camera cover glass 13, to acquire images of the environment. In the present embodiment, the depth cameras 13 are coupled to the front casing 10 to provide a field of view of 170° vertical and 90°horizontal. The acquisition module 2 further comprises a thermal camera 14 to identify the position of the head of the user.

The images acquired by the depth cameras 12 are processed by a vision processing board 15.

The acquisition module 2 further comprises electronic components 16, for instance a processor to control the cameras 3, 15 is separated from the vision processing board by a separator 17.

The data acquisition module 2 further comprises a GPS unit 18 to acquire GPS coordinates and an IMU unit 19 to detect inertial measurement data corresponding to a positioning of the user.

The system 1 further comprises a vibration command board to command the vibration of the haptic feedback unit 9.

Push buttons 21 (three) are also received in one the lateral faces of the back casing 5.

The computation module 3 of the system 1, placed in the harness on the backside of the user, comprises a CPU/TPU for executing the trained object detector model so that the detection of the objects is performed locally in the computation module 3.

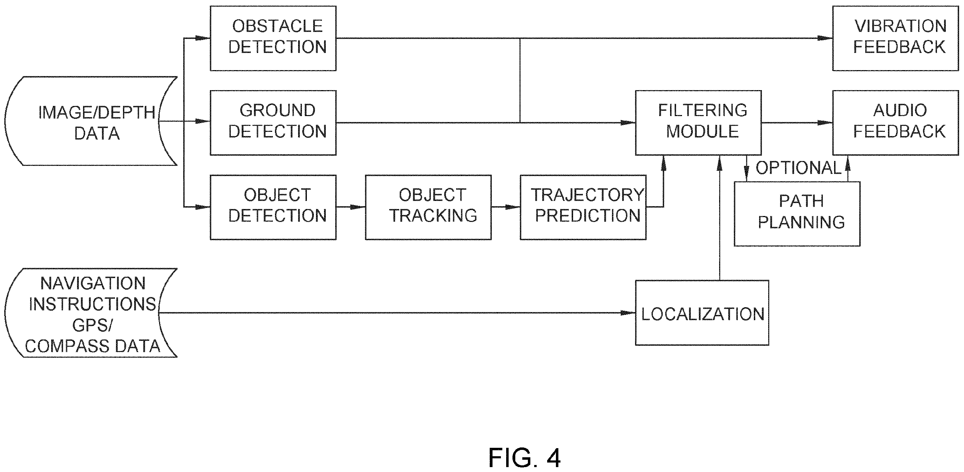

Figure 4 illustrates the main steps of some embodiments of the methods according to the present invention.

The method to notify the user the presence of an obstacle and/or an object starts by the acquisition of data (namely for instance classic mode), for instance images, depth image data. Advantageously, the field of view is defined to detect the floor on which the user is placed. The method further comprises a selection or filtering step to prioritize the detected objects carried out by a filtering module, in other words to select or discard some of the detected objects.

Figure 4 further illustrates an embodiment of a method for guiding a blind or visually impaired user in an environment according to the present invention. In this embodiment, the point of the method is to dynamically compute a path from a starting position to an end position through the environment to avoid the selected objects and/or the selected obstacles. Advantageously, the present invention can comprise a path planning step. The path planning step can be adapted to the user's behavior or preferences. For instance :
- either by assuming that the user wants to go straight, and try to make him follow a straight line with as little deviations as possible from that straight line when there is an object;
- or by having GPS information and guiding the user to the desired destination ( i.e. the user is not always going straight, but sometimes making turns upon instructions)

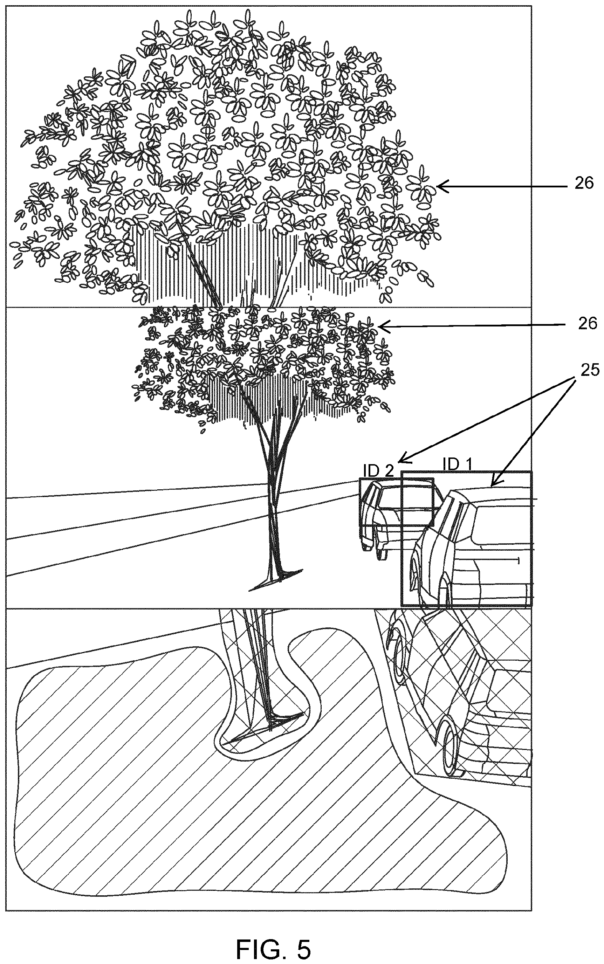

Figure 5 represents an image processed by the computation module 3. We can see the three distinct images (from top to bottom) acquired by the three cameras from the acquisition module doing the image acquisition. The cars 25 are detected and tracked (hence the "ID" above the bounding boxes). The bottom camera allows to detect the ground. Finally, we see the obstacle detection, where both the tree 26 and the car 25 are becoming obstacles. This creates the following feedback in the classic mode (not the path planning mode): a sound is played for the first car 25 "ID 1", since it is on user's way, and relatively close. No sound is played for the second car 25 "ID 2", since the car 25 "ID2" is still far from the user. The first car 25 "ID1" and tree 26 are both obstacles, and the user gets obstacle sounds for these two elements.

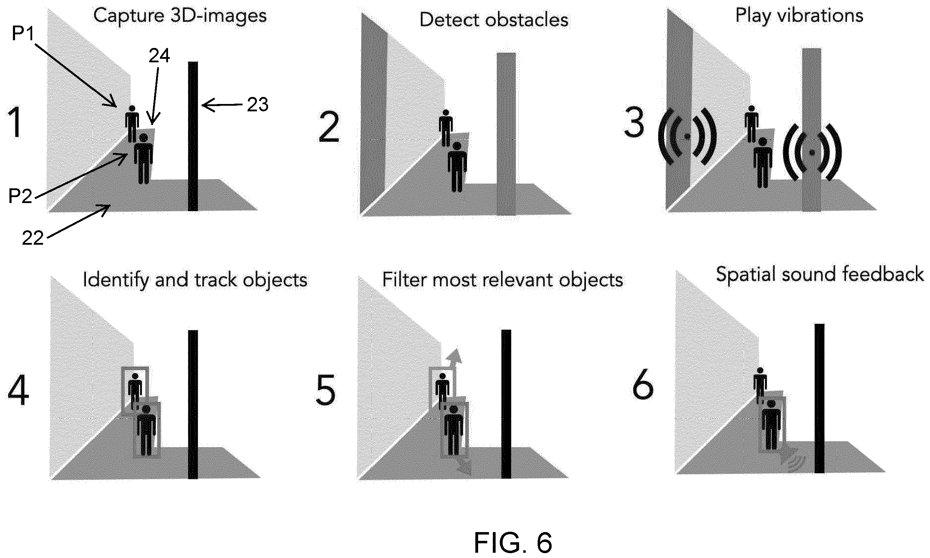

Figure 6 represents a first embodiment of the present invention. In this embodiment, the method comprises the detection of objects and obstacles in the environment of a user. The user is for instance equipped with a system represented in figure 1. The user is placed in an environment comprising a room 22 comprising a pillar 23 and connected to a hallway 24 where two persons P1, P2 are positioned, the person P1 being close to the user whereas the person P2 is placed down the hallway 24.

The point of the method is to guide the user from the room 22 toward the end of the hallway 23.

The method starts by (step 1) the acquisition of images of the environment surrounding the user, for instance 3D images. Then, the method further comprises the detection of obstacles and objects in parallel.

Steps 2 and 3 as represented in figure 3 describe the obstacle detection :
- Step 2: a safety field is determined, for instance 3 meters in the present example; The data acquired by the sensors, for instance the depth cameras are processed to detect obstacles: in the present example, the pillar 23 and the wall of the hallway 24 are detected;
- Steps 3: the vibration of the haptic actuator of the haptic feedback unit 9 is generated to notify the user of the presence of the pillar 23 and the wall of the hallway : in this example, the pattern of haptic feedback received by the user comprises two vibrations signals at the same time, i.e. a stronger signal on the right will warn him about the right obstacle, and a weaker vibration on the left, since the left obstacle is further away.

The method also comprises the detection of objects in steps 4 to 6 :
- Step 4: the acquired images are processed by applying a trained object detector to detect the objects in the environment of the user; in the present embodiment, the trained object detector identifies the person P1 and the person P2 as object;
- Step 5: the objects (i.e. P1 and P2) are tracked to attribute a score; in the present embodiment, the score is attributed based on the predicted trajectories of the persons P1 and P2; since the person P2 is moving towards the end of the hallway whereas the person P1 is coming toward the user, the score of the person P2 is lower compared to the person P1 so that the person P2 as an object is discarded and the person P1 qualifies as a selected object;
- Step 6: an audible feedback is generated for the person P1 : in this example, the pattern of audible feedback received by the user comprises a music note, attached in the sound library to a "person" label, will be played; before playing the audio, a signal treatment is applied to give the sound an angle (coming slightly from the left), a distance, and an elevation (here, average elevation); the music note is then played for the user.

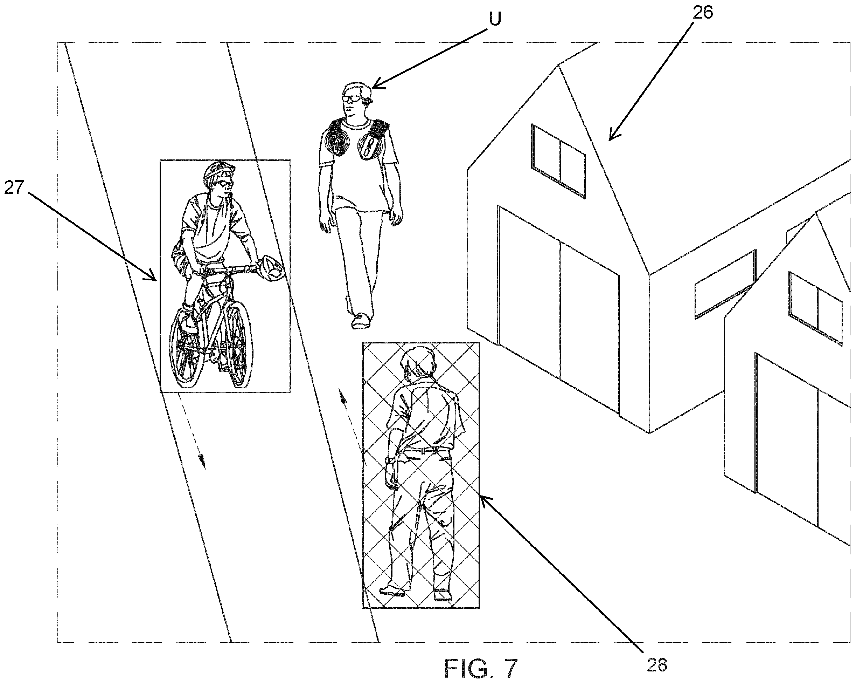

Figure 7 represents a user caring a system 1 according to the present invention. In the scene illustrated in figure 7 :
- User U is walking in the street;
- A house 26, a potential obstacle, is on his left, but not identified as an obstacle since it is not on his trajectory. Therefore, the filtering module does not identify the house 26 as a potential obstacle, and no feedback is provided to the user U.
- A bike 27 is identified on his right, but the bike 27 is not moving in user's direction. Therefore, the filtering module does not identify the bike 27 as an important object, and no feedback is provided to the user U.
- A pedestrian 28 is identified in front of him, the system 1 predicts its trajectory, identifies that the pedestrian 28 is walking towards the user U, the score of the object, i.e. the pedestrian 28, is above the predetermined (i.e. filtering) threshold, so the user U gets noticed. This is typically a sound feedback, associated to a person, that is getting louder as the

pedestrian 28 is coming closer to the user U. If the pedestrian 28 changes trajectory as the system 1 notices the blind user, the pedestrian 28 will be filtered out, and the scene will remain silent. If the system comprises a haptic feedback 9, the user U will start feeling vibrations, slightly on his right, as the pedestrian 28 comes closer and becomes an obstacle, and that these vibrations will intensify until the pedestrian 28 changes direction.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

### REFERENCE NUMBERS

- 1: System according to a first embodiment
- 2: Data acquisition module
- 3: Computation module
- 4: Feedback module
- B: Batterie module
- 5: Main casing
- 6: Belt or harness
- 7: Audio unit
- 8: Headphone
- 9: Haptic feedback unit
- 10: Front casing
- 11: Back casing
- 12: Depth cameras
- 13: Camera coverglass
- 14: Thermal camera
- 15: Vision processing board
- 16: electronic components
- 17: Separator
- 18: GPS unit
- 19: IMU unit
- 20: Vibration command board
- 21: Push buttons
- 22: Room
- 23: Pillar
- 24: Hallway
- 25: cars
- U: User
- 26: House
- 27: Bike
- 28: Pedestrian

## Claims

1. Computer-implemented method for notifying a blind or visually impaired user (U) placed in an environment of the presence of objects in said environment, the method comprises:
- detecting said objects in the environment by using at least one sensor configured for analysing the environment surrounding the user;
- generating and transmitting feedback to the user to notify said user (U) of the presence of said detected objects in the environment,
the method being **characterized in that** the detection of the objects comprises
i) acquiring data of the environment surrounding the user (U) by using at least one sensor, said data comprising at least images;
ii) processing the acquired data by applying a trained object detector model to identify said objects present in said environment;
iii) tracking the displacement of the detected objects to attribute a score to each detected object depending on at least one predetermined tracking criteria;
iv) selecting the objects whose score is above a predetermined threshold;
and **in that** the generation and transmission of feedback comprises
v) generating adaptative object feedback that is transmitted to the user (U) for each selected object, said adaptative object feedback comprising features that are adjusted depending on the score of each selected object to notify said user (U) about the presence of the objects in said environment.

2. Method according to claim 1, wherein said predetermined tracking criteria is chosen from the list comprising the distance between the user (U) and the selected object, the trajectory of the selected object, the speed of the selected object, the dangerousness of the selected object stationarity of the object, surroundings of the objects, or a combination thereof.

3. Method according to claim 1 or 2, wherein the method further comprises dynamically detecting objects by repeating steps i) to v) at about two times per second, preferably at least three times per second, more preferably at least about four times per second, for instance at least about five times per second.

4. Method according to any one of claims 1 to 3, wherein the method further comprises the detection of obstacles in the environment, the obstacle's detection comprising:
- ii') processing the acquired data by applying an obstacle detection tool to detect the obstacles present in said environment;
- iii') determining a safety field around said user based on a distance threshold;
- iv') filtering the detected obstacles to select obstacles that are within said safety field;
- v') generating adaptative obstacle feedback that is transmitted to the user (U) for each selected obstacle, said adaptative obstacle feedback comprising features that are adjusted depending on each selected obstacle to notify said user (U) about the presence of the obstacles within the safety field.

5. Method according to the preceding claim, wherein obstacle detection and object detection are carried out in parallel.

6. Method according to any one of claims 4 or 5, wherein the method further comprises
- dynamically detecting obstacles by repeating steps i) and ii') to v') at about five times per second, preferably at least eight times per second, more preferably at least about ten times per second, for instance at least about fifteen times per second.

7. Method according to any one of claims 4 to 6, wherein said adaptative obstacle feedback is based on a score attributed to each selected obstacle, the features of adaptative obstacle feedback being adjusted depending on said score, said score being based on at least one parameter chosen among the distance between the user and the selected obstacle, the trajectory of the selected obstacle, the speed of the selected obstacle, the dangerousness of the selected obstacle.

8. Method according to any one of claims 1 to 7, wherein object adaptative feedback and/or obstacle adaptative feedback comprises haptic feedback and/or audible feedback.

9. Method according to the preceding claim, wherein the features of haptic feedback that are adjustable being chosen among frequencies of the vibration, intensity of the vibration, duration of each vibration, direction of the vibration, start and end of the vibration, balanced vibration between a first direction and second direction, and/or the features of audible feedback that are adjustable comprise the frequency of the soundwaves, intensity of the sound wave, the duration of the sound waves, direction of the sound, type of sound for instance spoken sounds or short audio cues.

10. Method for guiding a blind or visually impaired user (U) in an environment, the method comprising:
- a) detecting the objects and/or the obstacles present in said environment by applying a method according to any one of claims 1 to 9;
- b) dynamically computing a path from a starting position to an end position through the environment to avoid the selected objects and/or the selected obstacles;
- c) preferably integrating said path into a computer device's navigation system to guide the user on said path, for instance a smartphone.

11. System (1) for notifying a blind or visually impaired user (U) placed in an environment of the presence of objects in said environment, the system (1) comprises:
- a data acquisition module (2) to acquire data of the environment surrounding the user, said data acquisition module (2) comprising at least a camera (12) to acquire images;
- a computation module (3) for
processing the acquired data by applying a trained object detector model to identify the objects present in said environment,
and for tracking the displacement of the detected objects to attribute a score to each detected object depending on at least one predetermined tracking criteria,
and for selecting the objects whose score is above a predetermined threshold;
- a feedback module (4) configured for generating adaptative object feedback that is transmitted to the user for each selected object, said adaptative object feedback comprising features that are adjusted by the feedback module depending on the score of each selected object to notify said user (U) about the presence of the objects in said environment.

12. System (1) according to claim 11, wherein the computation module (3) comprises a processor configured for executing the trained object detector model so that the detection of the objects is performed locally in the computation module (3) of the system (1), for instance a tensor processing unit TPU.

13. System (1) according to any one of claims 11 to 12, wherein the system (1) is further configured to detect the presence of obstacles in said environment, said obstacles corresponding to objects unidentified by the trained object detector, and wherein
the computational module (3) is further configured
for processing the acquired data by applying an obstacle detection tool to detect the obstacles present in said environment;
and for determining a safety field around said user (U);
and for filtering the detected obstacles to select obstacles that are within said safety field;
the feedback module (4) is further configured for generating adaptative obstacle feedback that is transmitted to the user (U) for each selected obstacle, said adaptative obstacle feedback comprising features that are adjusted depending on the score of each selected obstacle to notify said user about the presence of the obstacles within the safety field.

14. System (1) according to any one of claims 11 to 13, wherein the images are acquired by using at least a camera (12) with a predetermined field of view, said predetermined field of view is defined by at least about 120° vertical and at least about 60° horizontal, preferably at least about 160° vertical and at least about 80° horizontal, for instance between about 170° vertical and about 90°horizontal.

15. System (1) according to any one of claims 11 to 14, wherein the images are acquired by using several cameras (12), for instance between two and five cameras, preferably three cameras.
